# FASCICULE DE BREVET EUROPEEN

(11) **EP 2 671 123 B1**
(45) Date de publication et mention de la délivrance du brevet: **08.04.2015**
(21) Numéro de dépôt: 12707637.0
(22) Date de dépôt: 03.02.2012
(51) Int. Cl.: G05D 1/02, B63H 25/04

(54) **PROCEDE ET DISPOSITIF FLOTTANT AUTONOME D'ASSERVISSEMENT DE POSITION D'UNE EMBARCATION NAUTIQUE.**
AUTONOME SCHWIMMENDE VORRICHTUNG UND VERFAHREN ZUR STEUERUNG DER POSITION EINES WASSERFAHRZEUGS
AUTONOMOUS FLOATING DEVICE AND METHOD FOR SLAVING THE POSITION OF A NAUTICAL CRAFT

(30) Priorité: 03.02.2011 FR 1150842
(43) Date de publication de la demande: 11.12.2013
(73) Titulaire: Algorithme, 06300 Nice (FR)
(72) Inventeur: DELACHE, Alain, F-06300 Nice (FR); CASTELO-DELACHE, Véronique, F-06300 Nice (FR)
(74) Mandataire: Cornuejols, Georges
(86) Numéro de dépôt international: PCT/FR2012/050244
(87) Numéro de publication internationale: WO 2012/104565

(56) Documents cités:
- EP-A2- 1 724 683
- WO-A1-95/28682
- US-A- 5 386 368
- US-A1- 2009 095 208

## Description

### Domaine de l'invention

La présente invention concerne un procédé et un dispositif flottant autonome d'asservissement de position d'une embarcation nautique. Elle s'applique, en particulier aux embarcations de plaisance ou de pêche.

### Etats de la technique et problèmes techniques rencontrés

Lorsque les passagers d'une embarcation de plaisance dorment ou lorsqu'ils pêchent à la ligne, toute dérive de l'embarcation, qu'elle soit due au vent ou au courant marin, peut provoquer des désagréments. Par exemple, lorsque l'embarcation est proche de hauts-fonds, elle risque de s'échouer. Dans le cas de la pêche à la ligne, la zone de pêche ou la profondeur visée peuvent ne pas être obtenues ou maintenue du fait de la dérive.

On connaît l'utilisation d'ancres qui prennent ancrage sur le fond marin. Cependant, ces ancres présentent de nombreux inconvénients. D'une part, elles ne peuvent être utilisées que lorsque la profondeur de l'eau est faible. D'autre part, elles peuvent endommager la flore et la faune marine.

Certaines embarcations, telles que des paquebots sont munis de systèmes de positionnement par satellites, dont le principal est connu sous le nom de « GPS » (acronyme de « Global Positioning System » pour système de positionnement global) qui asservissent les moteurs principaux de l'embarcation et, éventuellement, le gouvernail, pour maintenir l'embarcation en une position fixe, autant que possible, comme par exemple dans les documents US 5 386 368 ou WO 9 528 682. Ces systèmes ont aussi des inconvénients. D'une part, ils provoquent une forte consommation d'énergie, généralement fossile et donc très polluante. D'autre part, ils provoquent des vibrations dans l'embarcation qui peuvent indisposer les passagers.

### Exposé de l'invention

La présente invention vise à remédier à tout ou partie de ces inconvénients. A cet effet, selon un premier aspect, la présente invention vise un dispositif flottant autonome d'asservissement de position d'une embarcation mobile, qui comporte :
- un moyen de détermination de position géographique,
- un organe de propulsion,
- une source d'énergie pour alimenter l'organe de propulsion,
- un moyen d'orientation de la force exercée par l'organe de propulsion,
- un moyen d'attache d'un filin relié à ladite embarcation,
- un moyen de sélection d'une zone géographique et
- des moyens de contrôle de l'organe de propulsion et du moyen d'orientation, adaptés, en fonction de la position géographique du dispositif à maintenir le dispositif dans ladite zone géographique.

Grâce à ces dispositions, l'utilisateur peut fixer une zone dans laquelle il souhaite que son embarcation reste, par exemple une zone de pêche, une position fixe ou une zone sans hauts-fonds, et, automatiquement, le dispositif détecte le risque de sortir de la zone choisie et commande l'organe de propulsion et le moyen d'orientation pour maintenir l'embarcation dans cette zone. L'utilisateur peut ainsi disposer de son temps.

De plus, le dispositif étant autonome, il est indépendant de l'embarcation et compatible avec toutes les embarcations, sans modification de celles-ci.

Selon des caractéristiques particulières, les moyens de contrôle sont, en outre, adaptés à orienter le dispositif dans une direction de moindre consommation en énergie lors du fonctionnement de l'organe de propulsion.

Ainsi, le dispositif étant autonome, il peut prendre une orientation différente de celle de l'embarcation et minimiser ainsi sa consommation en énergie.

Selon des caractéristiques particulières, le dispositif objet de l'invention comporte, en outre, un moyen de détermination de l'orientation géographique du dispositif, les moyens de contrôle étant adaptés, en fonction de la position géographique du dispositif et de l'orientation géographique du dispositif à maintenir le dispositif dans ladite zone géographique et à orienter le dispositif dans une direction de moindre consommation en énergie lors du fonctionnement de l'organe de propulsion.

Selon des caractéristiques particulières, le moyen de détermination de l'orientation géographique du dispositif comporte un magnétomètre.

Grâce à chacune de ces dispositions, la détermination de la direction de moindre consommation est plus aisée.

Selon des caractéristiques particulières, le moyen d'orientation de la force exercée par l'organe de propulsion est adapté à mettre l'organe de propulsion en rotation autour d'un axe vertical.

Grâce à ces dispositions, la force exercée par l'organe de propulsion est orientée indépendamment de l'orientation du dispositif.

Selon des caractéristiques particulières, le moyen de détermination de position géographique est adapté à recevoir et à traiter des signaux provenant de satellites terrestres.

Grâce à ces dispositions, la détermination de la position du dispositif est particulièrement précise.

Selon des caractéristiques particulières, le dispositif comporte, en outre, un boîtier de commande à distance du fonctionnement des moyens de contrôle.

Grâce à ces dispositions, l'utilisateur peut commander le dispositif à distance, depuis l'embarcation.

Selon des caractéristiques particulières, le dispositif comporte un moyen de transmission audit boîtier de données représentatives de l'état d'au moins un élément du dispositif et de données représentatives du maintien du dispositif dans ladite zone.

Selon des caractéristiques particulières, le dispositif comporte un moyen de détection de risque que le dispositif sorte de ladite zone et un moyen de transmission audit boîtier de données représentatives d'alarmes en fonction dudit risque.

Selon des caractéristiques particulières, le dispositif comporte un moyen de détection de proximité avec un écueil et un moyen de transmission audit boîtier de données représentatives de ladite proximité.

Grâce à chacune de ces dispositions, l'utilisateur peut être avertit de l'état et de la situation du dispositif ou d'un risque d'échouage.

Selon un deuxième aspect, la présente invention vise un procédé d'asservissement de position d'une embarcation mobile par un dispositif autonome flottant, qui comporte un organe de propulsion, une source d'énergie pour alimenter l'organe de propulsion, un moyen d'orientation de la force exercée par l'organe de propulsion, un moyen d'attache d'un filin relié à ladite embarcation et un moyen de sélection d'une zone géographique, qui comporte :
- une étape de détermination de position géographique,
- une étape de contrôle de l'organe de propulsion et du moyen d'orientation, en fonction de la position géographique du dispositif, pour maintenir le dispositif dans ladite zone géographique.

D'autres avantages, buts et caractéristiques de la présente invention apparaîtront à la lecture de la description qui suit et à l'examen des figures qui l'accompagnent. Cette description est donnée à titre indicatif et nullement limitatif de l'invention.

### Brève description des figures

La figure 1 est une représentation schématique, en perspective, d'un dispositif objet de l'invention et d'une embarcation.
La figure 2 est une représentation schématique, en perspective inférieure, du dispositif objet de l'invention illustré en figure 1.
La figure 3 est une représentation schématique, en perspective supérieure, du dispositif objet de l'invention illustré en figures 1 et 2.
La figure 4 est une représentation schématique, en perspective, des parties électriques et électroniques du dispositif illustré en figures 1 à 3.
La figure 5 est un schéma-bloc des relations entre les éléments illustrés en figure 4.
La figure 6 est un logigramme d'étapes mises en oeuvre par une unité centrale illustrée en figure 5, pour la mise en oeuvre du procédé objet de l'invention.

### Description d'au moins un mode de réalisation de l'invention

On note, dès à présent, que les figures ne sont pas à l'échelle.

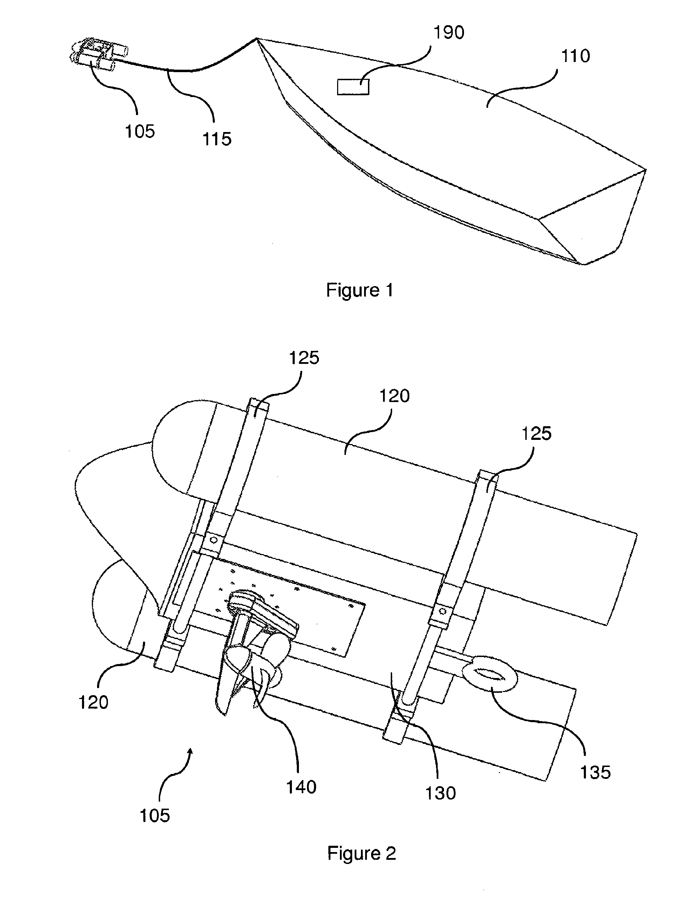

On observe, en figure 1, un dispositif 105 objet de la présente invention relié à une embarcation 110 par un filin 115 et un boîtier 190 de commande du dispositif 105.

Le dispositif 105 est un dispositif flottant décrit en regard des figures 2 à 6. L'embarcation 110 est une embarcation nautique de type quelconque, par exemple une embarcation de plaisance, comme représentée ici, ou de pêche. Le filin 115 est de type quelconque. Le boîtier 190 est muni d'un écran (non représenté), de touches (non représentées), éventuellement intégrées à l'écran lorsque celui-ci est tactile et d'un moyen de communication sans fil (non représenté) avec le dispositif 105. Par exemple, le boîtier 190 est un téléphone mobile, un assistant personnel numérique ou une tablette électronique de type connu, muni de moyens de communication Bluetouth (marque déposée) ou Wifi et d'une application informatique d'échange de données avec le dispositif 105 et d'affichage de données à l'utilisateur.

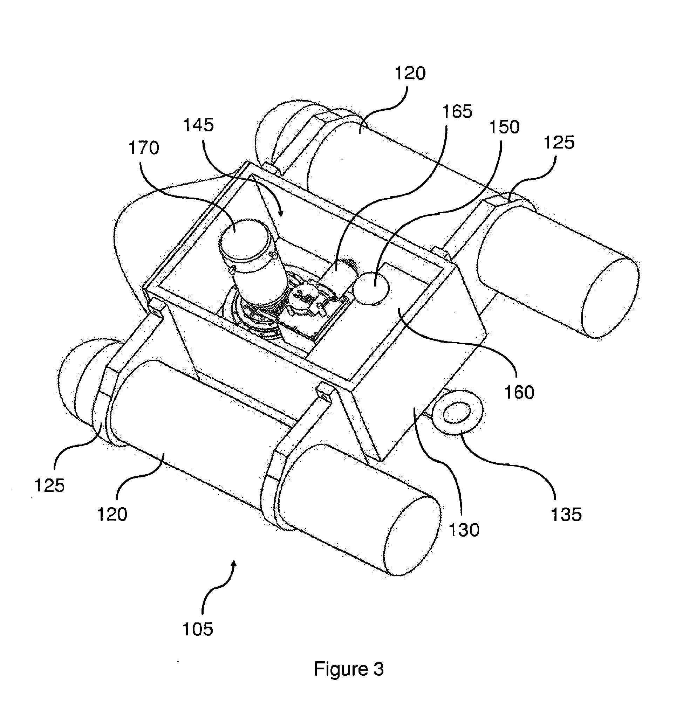

On observe, en figures 2 et 3, que le dispositif 105 comporte deux flotteurs 120, reliés par des moyens de fixation 125 à un caisson étanche 130. Le caisson étanche 130 porte une attache de filin arrière 135, un moyen de propulsion 140 et des éléments électriques et électronique 145.

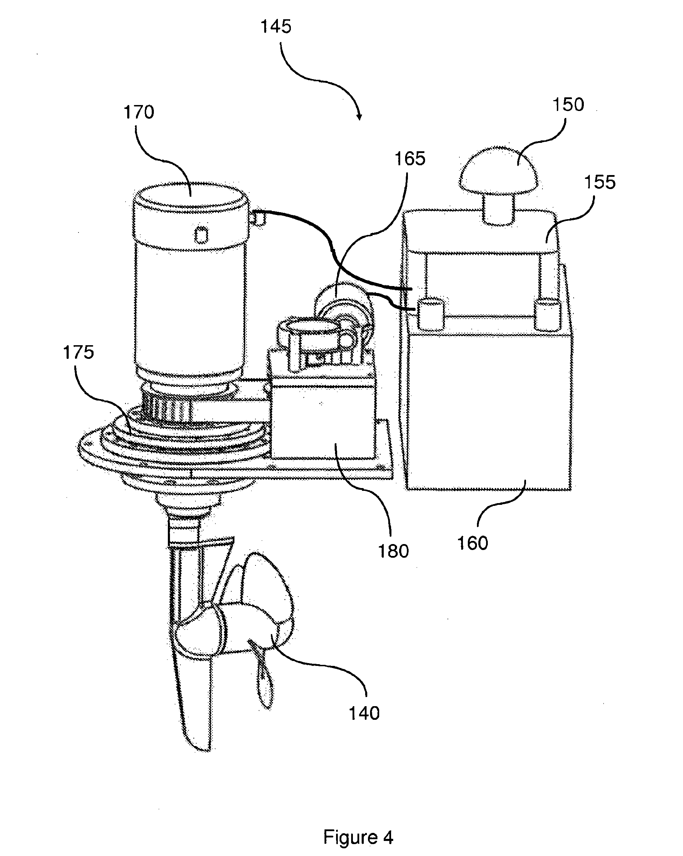

Le moyen de propulsion 140 comporte un organe ou moteur de propulsion 170 (voir figure 4) et une hélice orientés par un moteur d'orientation 165.

L'organe ou moteur de propulsion 140 est placé en une position centrale, par rapport aux forces que peuvent exercer le courant marin ou le vent. L'attache de filin 135 est, en variante, mobile, par exemple le long d'un rail courbé. Elle est placée de telle façon que dans le cas d'une vague importante ou une bourrasque de vent le dispositif ne se renverse pas.

D'autres organes de propulsion du 105 peuvent être utilisés. En variante, l'hélice est fixe par rapport au dispositif 105 et un gouvernail orienté par un moteur d'orientation similaire au moteur d'orientation 165 est prévu.

On observe, en figure 4, un récepteur de signaux de positionnement 150, une unité de commande 155, une batterie 160, le moteur d'orientation 165, le moteur de propulsion 170, une connexion étanche 175 et une boîte de reprise de mouvement 180.

Le récepteur de signaux de positionnement 150 est préférentiellement constitué d'un récepteur de signaux de satellites terrestres et d'un processeur adapté à déterminer la position géographique du dispositif 105. Par exemple, le récepteur 150 est un récepteur de signaux émis par la constellation de satellites GPS ou la constellation de satellites Galiléo (marque déposée).

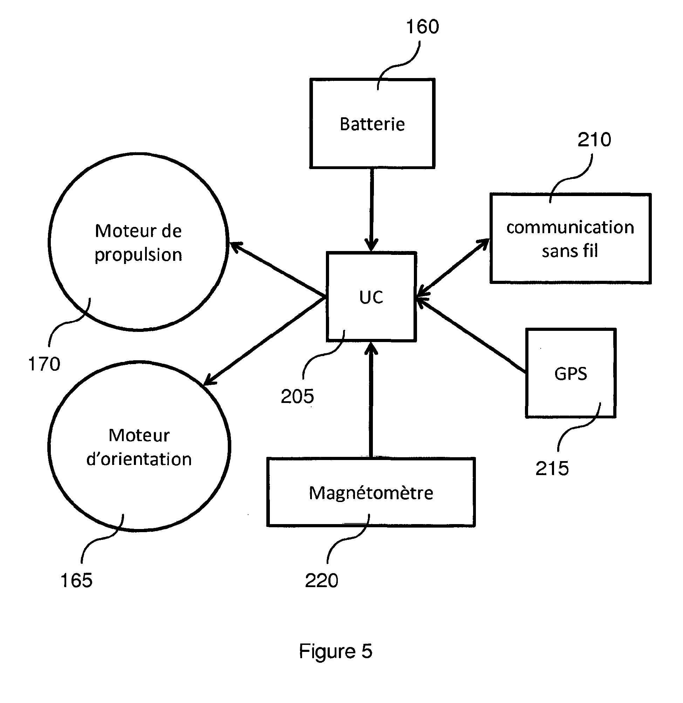

L'unité de commande 155 comporte une unité centrale 205 (voir figure 5) comportant un processeur (non représenté), des mémoires (non représentées) et des moyens d'amplification (non représentés) des signaux de commande des moteurs. La batterie 160 est une batterie électrique rechargeable, éventuellement munie d'un convertisseur pour permettre sa recharge sur le secteur et/ou d'une connexion à un générateur électrique ou à une batterie de l'embarcation 110.

Le moteur d'orientation 165 est adapté à faire tourner, autour d'un axe vertical, le moteur de propulsion 170, par l'intermédiaire de la boîte de reprise de mouvement 180.

La connexion étanche 175 permet au moteur de propulsion 170 de tourner, de part et d'autre de la paroi inférieure du caisson 130 autour de l'axe vertical pour orienter l'axe de l'hélice.

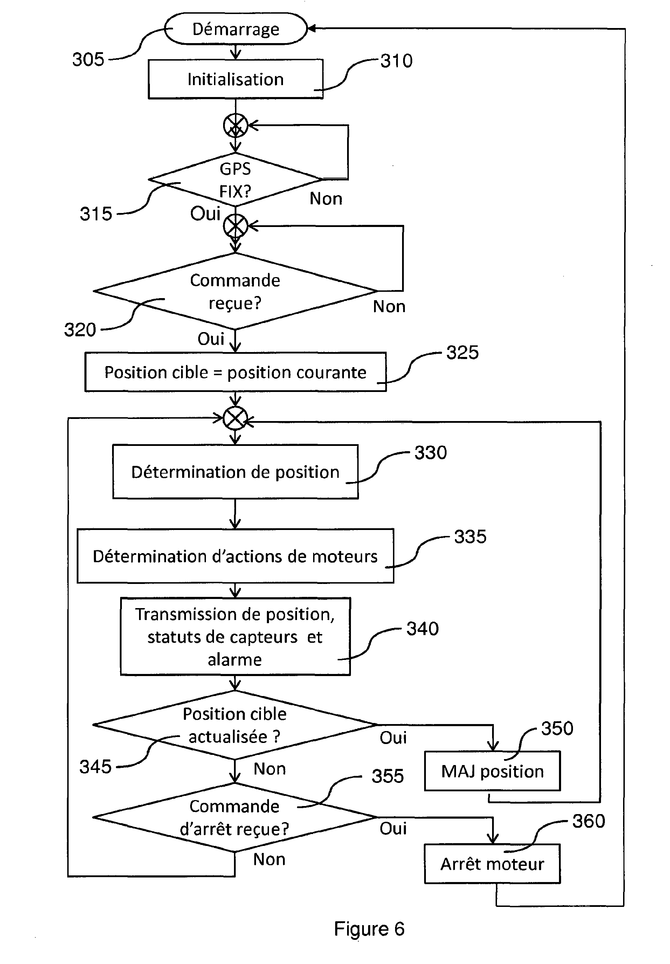

On observe, en figure 5, que l'unité centrale 205 de l'unité de commande 155 est alimentée par la batterie 160 et reçoit des données de la part du circuit 215 du récepteur 150, d'un moyen de communication sans fil 210 adapté à communiqué avec le boîtier 190 et d'un magnétomètre 220. Après traitement, l'unité centrale 205 transmet des commandes au moteur de propulsion 170, au moteur d'orientation 165 et des données au moyen de communication 210. Le fonctionnement de l'unité centrale 205 est détaillé en regard de la figure 6.

Après une étape de démarrage 305, qui peut être provoquée, à distance, par le boîtier 190, au cours d'une étape 310, l'unité centrale 205 charge en mémoire le programme de fonctionnement, de manière connue en soi.

Au cours d'une étape 315, l'unité centrale 205 détermine si une position géographique lui est fournie par le récepteur 150. Si oui, on passe à l'étape 320. Sinon, l'unité centrale réitère l'étape 315.

Au cours de l'étape 320, l'unité centrale 205 détermine si elle a reçu une commande d'asservissement de position en provenance du boîtier 190, par l'intermédiaire du moyen de communication 210. Si oui, elle passe à l'étape 325. Sinon, elle réitère l'étape 320.

Au cours de l'étape 325, l'unité centrale 205 met en mémoire la position géographique courante come valeur de position géographique cible.

Puis, au cours d'une étape 330, l'unité centrale reçoit une nouvelle position géographique de la part du récepteur 150 et une orientation du dispositif 105, de la part du magnétomètre 220.

Au cours d'une étape 335, l'unité centrale détermine, à partir de la différence entre la position courante et la position cible, d'une part, la vitesse de rotation de l'hélice du moyen de propulsion et, d'autre part, l'orientation à donner au moteur de propulsion.

En ce qui concerne la vitesse de rotation de l'hélice, l'unité centrale la fait croître jusqu'à ce que la distance entre la position courante et la position cible diminue. L'asservissement se fait ainsi selon une boucle de contre-réaction.

En ce qui concerne l'angle formé entre l'axe du dispositif 105 et l'axe de l'hélice, la loi d'asservissement est, par exemple de type PID (acronyme de « Proportionnel Intégral Dérivé »). Ce type de correcteur s'adapte aux perturbations et est insensible aux variations des éléments perturbateurs sur le long terme. L'ajustement des coefficients du correcteur permet que, par exemple, si le courant passe de un noeud à trois Noeuds à l'instant t, à t + 1 minute, le dispositif est recalé tout en ayant subit temporairement un écart inférieur à 15 m avec une résolution GPS à 3 m.

En variante, on prévoit un accéléromètre, par exemple de type MEMS (acronyme de Micro ElectroMechanical System pour système électromécanique miniature) pour augmenter la résolution.

Ainsi, l'unité centrale 205 oriente le dispositif dans une direction de moindre consommation en énergie lors du fonctionnement du moteur de propulsion.

Au cours d'une étape 340, l'unité centrale 205 transmet au boîtier 190 la position géographique courante, la distance entre la position courante et la position cible, le statut (fonctionnement correct ou non) des capteurs, ici du récepteur 215 et du magnétomètre 220, et, le cas échéant, des données d'alarme.

Par exemple, une alarme représente une dérive que le dispositif ne peut compenser même en utilisant le moteur de propulsion à pleine puissance.

Selon un deuxième exemple, une alarme représente une distance entre la position géographique courante et la position cible supérieure à une valeur prédéterminée, par exemple paramétrable par l'utilisateur en utilisant le boîtier 190.

Selon un troisième exemple, le récepteur 215 intègre une base de données d'écueils sous-marins, par exemple des hauts-fonds, des récifs ou des zones interdites à la navigation. Une alarme est alors automatiquement déclenchée à l'approche de l'un de ces écueils, par exemple à moins d'un kilomètre de l'un d'entre eux.

Selon un quatrième exemple, l'unité centrale détermine la capacité électrique restante dans la batterie 160 et émet une alarme en dessous d'une valeur limite prédéterminée.

Au cours d'une étape 345, l'unité centrale 205 détermine si la position cible a été actualisée par l'utilisateur. Si oui, au cours d'une étape 350, la position cible est mise à jour, par exemple en prenant la position géographique courante comme position cible. Puis on retourne à l'étape 330.

Si la position cible n'est pas actualisée par l'utilisateur, au cours d'une étape 355, l'unité centrale 205 détermine si une commande d'arrêt de fonctionnement des moteurs a été reçue de la part du boîtier 190. Si oui, au cours d'une étape 360, on arrête les moteurs. Puis on retourne à l'étape 305.

Si aucune commande n'a été reçue, on retourne à l'étape 330.

En variante, au cours des étapes 320 et 325, l'utilisateur sélectionne une zone dans laquelle il autorise l'embarcation à dériver, par exemple au cours d'une nuit. Dans ce cas, au cours de l'étape 335, l'unité centrale 205 attend que la position courante arrive à proximité d'une limite de la zone choisie par l'utilisateur avant de démarrer le ou les moteur(s).

En variante, au cours des étapes 320 et 325, l'utilisateur sélectionne une zone dans laquelle l'embarcation possède suffisamment de profondeur pour ne pas risquer de s'échouer. Dans ce cas, au cours de l'étape 335, l'unité centrale 205 attend que la position courante arrive à proximité d'une limite de la zone choisie par l'utilisateur avant de démarrer le ou les moteur(s).

En variante, la batterie du dispositif est reliée à une source d'énergie électrique de l'embarcation, par exemple un groupe électrogène ou une batterie embarquée, pour compléter sa capacité électrique.

En variante, on remplace le moteur de propulsion 170 par un moteur thermique muni d'un réservoir d'essence. Dans ce cas, le démarreur, l'injection et l'embrayage du moteur thermique sont commandés par l'unité centrale 205.

## Revendications

1. Dispositif (105) flottant autonome d'asservissement de position d'une embarcation mobile (110), **caractérisé en ce qu'**il comporte :
- un moyen (150) de détermination de position géographique,
- un organe de propulsion (170),
- une source d'énergie (160) pour alimenter l'organe de propulsion,
- un moyen d'orientation (165) de la force exercée par l'organe de propulsion,
- un moyen (135) d'attache d'un filin (115) relié à ladite embarcation,
- un moyen (155) de sélection d'une zone géographique et
- des moyens (155) de contrôle de l'organe de propulsion et du moyen d'orientation, adaptés, en fonction de la position géographique du dispositif à maintenir le dispositif dans ladite zone géographique.

2. Dispositif (105) selon la revendication 1, dans lequel les moyens (155) de contrôle sont, en outre, adaptés à orienter le dispositif dans une direction de moindre consommation en énergie lors du fonctionnement de l'organe de propulsion (170).

3. Dispositif (105) selon l'une des revendications 1 ou 2, qui comporte, en outre, un moyen (220) de détermination de l'orientation géographique du dispositif, les moyens (155) de contrôle étant adaptés, en fonction de la position géographique du dispositif et de l'orientation géographique du dispositif à maintenir le dispositif dans ladite zone géographique et à orienter le dispositif dans une direction de moindre consommation en énergie lors du fonctionnement de l'organe de propulsion (170).

4. Dispositif (105) selon la revendication 3, dans lequel le moyen (220) de détermination de l'orientation géographique du dispositif comporte un magnétomètre.

5. Dispositif (105) selon l'une des revendications 1 à 4, dans lequel le moyen d'orientation (165) de la force exercée par l'organe de propulsion (170) est adapté à mettre l'organe de propulsion en rotation autour d'un axe vertical.

6. Dispositif (105) selon l'une des revendications 1 à 5, dans lequel le moyen (150) de détermination de position géographique est adapté à recevoir et à traiter des signaux provenant de satellites terrestres.

7. Dispositif (105) selon l'une quelconque des revendications 1 à 6, qui comporte, en outre, un boîtier (190) de commande à distance du fonctionnement des moyens de contrôle.

8. Dispositif (105) selon la revendication 7, qui comporte un moyen (155) de transmission audit boîtier (190) de données représentatives de l'état d'au moins un élément du dispositif et de données représentatives du maintien du dispositif dans ladite zone.

9. Dispositif (105) selon l'une des revendications 7 ou 8, qui comporte un moyen (155) de détection de risque que le dispositif sorte de ladite zone et un moyen de transmission audit boîtier (190) de données représentatives d'alarmes en fonction dudit risque.

10. Dispositif (105) selon l'une des revendications 7 à 9, qui comporte un moyen (155) de détection de proximité avec un écueil et un moyen de transmission audit boîtier (190) de données représentatives de ladite proximité.

11. Procédé d'asservissement de position d'une embarcation mobile (110) par un dispositif autonome flottant (105), qui comporte un organe de propulsion (170), une source d'énergie pour alimenter l'organe de propulsion, un moyen d'orientation (165) de la force exercée par l'organe de propulsion, un moyen d'attache d'un filin (115) relié à ladite embarcation et un moyen (155) de sélection d'une zone géographique, qui comporte :
- une étape de détermination de position géographique,
- une étape de contrôle de l'organe de propulsion et du moyen d'orientation, en fonction de la position géographique du dispositif, pour maintenir le dispositif dans ladite zone géographique.

## Patentansprüche

1. Eigenständige schwimmende Vorrichtung (105) zur Lageregelung eines beweglichen Bootes (110), **dadurch gekennzeichnet, dass** sie folgendes umfasst:
- ein Hilfsmittel (150) zur geografischen Positionsbestimmung,
- ein Antriebsmittel (170),
- eine Energiequelle (160) zum Versorgen des Antriebsmittels,
- ein Hilfsmittel zur Orientierung (165) der durch das Antriebsmittel ausgeübten Kraft,
- ein Hilfsmittel (135) zur Befestigung einer Leine (115), die mit dem besagten Boot verbunden ist,
- ein Hilfsmittel (155) zur Auswahl einer geografischen Zone und
- Hilfsmittel (155) zur Kontrolle des Antriebsmittels und des Hilfsmittels zur Orientierung, die sich dazu eignen, die Vorrichtung je nach geografischer Position der Vorrichtung in der besagten geografischen Zone zu halten.

2. Vorrichtung (105) nach Anspruch 1, bei der sich die Hilfsmittel (155) zur Kontrolle darüber hinaus dazu eignen, die Vorrichtung beim Betrieb des Antriebsmittels (170) in eine Richtung mit geringerem Energieverbrauch zu orientieren.

3. Vorrichtung (105) nach einem der Ansprüche 1 oder 2, die darüber hinaus ein Hilfsmittel (220) zur Bestimmung der geografischen Orientierung der Vorrichtung umfasst, wobei sich die Hilfsmittel (155) zur Kontrolle darüber hinaus dazu eignen, die Vorrichtung je nach geografischer Position der Vorrichtung und je nach geografischer Orientierung der Vorrichtung in der besagten geografischen Zone zu halten, und die Vorrichtung beim Betrieb des Antriebsmittels (170) in eine Richtung mit geringerem Energieverbrauch zu orientieren.

4. Vorrichtung (105) nach Anspruch 3, bei der das Hilfsmittel (220) zur Bestimmung der geografischen Orientierung der Vorrichtung ein Magnetometer umfasst.

5. Vorrichtung (105) nach einem der Ansprüche 1 bis 4, bei der sich das Hilfsmittel zur Orientierung (165) der durch das Antriebsmittel (170) ausgeübten Kraft dazu eignet, das Antriebsmittel in Drehung um eine vertikale Achse zu versetzen.

6. Vorrichtung (105) nach einem der Ansprüche 1 bis 5, bei der sich das Hilfsmittel (150) zur geografischen Positionsbestimmung dazu eignet, Signale aus terrestrischen Satelliten zu empfangen und zu verarbeiten.

7. Vorrichtung (105) nach irgendeinem der Ansprüche 1 bis 6, die darüber hinaus ein Gehäuse (190) zur Fernsteuerung des Betriebs der Hilfsmittel zur Kontrolle umfasst.

8. Vorrichtung nach Anspruch 7, die ein Hilfsmittel (155) zur Übertragung von repräsentativen Daten über den Zustand von zumindest einem Element der Vorrichtung und von repräsentativen Daten über die Haltung der Vorrichtung in der besagten Zone an das Fernsteuergehäuse (190) enthält.

9. Vorrichtung (105) nach einem der Ansprüche 7 oder 8, die ein Hilfsmittel (155) zur Erfassung der Gefahr umfasst, dass die Vorrichtung die besagte Zone verlässt, und ein Hilfsmittel zur Übertragung von repräsentativen Alarmdaten an das Fernsteuergehäuse (190) in Abhängigkeit von der besagten Gefahr.

10. Vorrichtung (105) nach einem der Ansprüche 7 bis 9, die ein Hilfsmittel (155) zur Abstandsermittlung zu einem Riff umfasst, und ein Hilfsmittel zur Übertragung von repräsentativen Daten über den besagten Abstand an das Fernsteuergehäuse (190).

11. Verfahren zur Lageregelung eines beweglichen Bootes (110) durch eine eigenständige schwimmende Vorrichtung (105), die ein Antriebsmittel (170), eine Energiequelle zum Versorgen des Antriebsmittels, ein Hilfsmittel zur Orientierung (165) der durch das Antriebsmittel ausgeübten Kraft, ein Hilfsmittel zur Befestigung einer Leine (115), die mit dem besagten Boot verbunden ist, und ein Hilfsmittel (155) zur Auswahl einer geografischen Zone umfasst, folgendes umfassend:
- einen Schritt zur geografischen Positionsbestimmung,
- einen Schritt zur Kontrolle des Antriebsmittels und des Hilfsmittels zur Orientierung in Abhängigkeit von der geografischen Position der Vorrichtung, um die Vorrichtung in der besagten geografischen Zone zu halten.

## Claims

1. Autonomous floating device (105) for position control of a mobile boat (110), **characterized in that** it comprises:
- a means (150) of determining the geographical position;
- a propulsion unit (170);
- a power source (160) for powering the propulsion unit;
- a means of orienting (165) the force exerted by the propulsion unit;
- a means (135) of attaching a cable (115) linked to said boat;
- a means (155) of selecting a geographical area; and
- means (155) of controlling the propulsion unit and the orientation means, designed, according to the geographical position of the device, to keep the device in said geographical area.

2. Device (105) according to claim 1, wherein the control means (155) are also designed to orient the device in a direction of lowest power consumption during the operation of the propulsion unit (170).

3. Device (105) according to one of claims 1 or 2, which also comprises a means (220) of determining the geographical orientation of the device, the control means (155) being designed, according to the device's geographical position and the device's geographical orientation, to keep the device within said geographical area, and to orient the device in a direction of lowest power consumption during the operation of the propulsion unit (170).

4. Device (105) according to claim 3, wherein the means (220) of determining the geographical orientation of the device comprises a magnetometer.

5. Device (105) according to one of claims 1 to 4, wherein the means of orienting (165) the force exerted by the propulsion unit (170) is designed to set the propulsion unit in rotation about a vertical axis.

6. Device (105) according to one of claims 1 to 5, wherein the means (150) of determining the geographical position is designed to receive and process signals coming from terrestrial satellites.

7. Device (105) according to any one of claims 1 to 6, which also comprises a control unit (190) for remotely controlling the operation of the control means.

8. Device (105) according to claim 7, which comprises a means (155) of transmitting to said unit (190) data representative of the status of at least one element of the device and data representative of keeping the device within said area.

9. Device (105) according to one of claims 7 or 8, which comprises a means (155) of detecting a risk that the device might leave said area, and a means of transmitting to said unit (190) data representative of alarms as a function of said risk.

10. Device (105) according to one of claims 7 to 9, which comprises a means (155) of detecting proximity to a reef, and a means of transmitting to said unit (190) data representative of said proximity.

11. Method of controlling the position of a mobile boat (110) by an autonomous floating device (105), which comprises a propulsion unit (170), a power source for powering the propulsion unit, a means of orienting (165) the force exerted by the propulsion unit, a means of attaching a cable (115) linked to said boat, and a means (155) of selecting a geographical area, which comprises:
- a step of determining the geographical position;
- a step of controlling the propulsion unit and the orientation means, according to the geographical position of the device, for keeping the device within said geographical area.
